Europäisches Patentamt

European Patent Office

Office européen des brevets

(11) Veröffentlichungsnummer: **0 248 366 B1**

## EUROPÄISCHE PATENTSCHRIFT

(45) Veröffentlichungstag der Patentschrift: **24.06.92**

(51) Int. Cl.5: **C09K 3/10**, C09D 5/34

(21) Anmeldenummer: **87107818.4**

(22) Anmeldetag: **29.05.87**

Die Akte enthält technische Angaben, die nach dem Eingang der Anmeldung eingereicht wurden und die nicht in dieser Patentschrift enthalten sind.

(54) **Glättmittel für Fugendichtungsmassen.**

(30) Priorität: **06.06.86 DE 3619142**

(43) Veröffentlichungstag der Anmeldung:
**09.12.87 Patentblatt 87/50**

(45) Bekanntmachung des Hinweises auf die Patenterteilung:
**24.06.92 Patentblatt 92/26**

(84) Benannte Vertragsstaaten:
**AT BE CH DE ES FR GB IT LI LU NL SE**

(56) Entgegenhaltungen:
**US-A- 4 171 337**

**CHEMICAL ABSTRACTS, Band 85, 1976, Zusammenfassung Nr. 82567g, Columbus, Ohio, US; & JP-A-51 30 820 (INTERNATIONAL PAINT CO. LTD) 11-09-74**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Podola, Tore**
**Deusserstrasse 31**
**W-4019 Monheim(DE)**
Erfinder: **Knop, Bernhard, Dr.**
**Robert-Koch Strasse 10**
**W-4019 Monheim(DE)**
Erfinder: **Loth, Helmut**
**Ursulaweg 17**
**W-4300 Essen 1(DE)**

**Beschreibung**

Gegenstand der vorliegenden Erfindung ist die Verwendung von bestimmten wäßrigen, insbesondere wäßrig-alkoholischen Lösungen zum Glätten der Oberflächen von Dichtungsmassen, die in Fugen, insbesondere bei Bauwerken, eingebracht worden sind.

Fugendichtungsmassen der verschiedensten Art werden sowohl im Baugewerbe als auch in verwandten Zweigen der Technik in umfangreichen Maße eingesetzt. Im allgemeinen werden diese Massen aus geeigneten Behältnissen, insbesondere Kartuschen, heraus direkt in die abzudichtenden Fuge hineingedrückt.

Bei dem Ausspritzen der Fugen mit den Massen entstehen häufig sogenannte Lunker und weiterhin ist es sehr schwierig, immer gleichmäßig glatte Oberflächen zu erhalten. Deshalb müssen die Oberflächen der Dichtungsmassen, bevor die Masse als solche erstarrt, einer glättenden Oberflächenbehandlung unterzogen werden. Dabei wird gleichzeitig die Dichtungsmasse fest in die Fugen gedrückt und etwaige Lunker oder Fehlstellen werden ausgefüllt sowie ein intensiver Kontakt des Dichtstoffes zum Untergrund und damit eine bessere Haftung bewirkt.

Zum Glätten wird meist ein geeignetes Glättwerkzeug wie ein Spatel, ein Glättholz oder dergleichen verwendet, wobei jedoch nicht auszuschließen ist, daß durch den starken Druck, welcher mit dem Glättwerkzeug ausgeübt wird, eine Haftung auch zwischen ihm und dem Fugendichtungsmaterial eintritt.

Aus diesem Grunde werden beim Glätten als Trenn- und Gleitmittel in Abhängigkeit von der Art des Dichtstoffs die verschiedensten Materialien verwendet. In dem einfachsten Fall verwendet man Wasser, das noch für diesen Zweck häufig durch Zusatz von Netzmitteln verbessert wird. Als Netzmittel kommen beispielsweise Seifenlösungen aus Alkalisalzen von Fettsäuren, insbesondere Natrium- und Kaliumseifen in Frage, ebenso aber auch anionenaktive Netzmittel, wie sie als Haushaltsspülmittel weit verbreitet sind.

Ein Nachteil dieses Zusatzes von oberflächenaktiven Substanzen (Detergentien) ist ihre emulgierende Wirkung, welche sie insbesondere gegenüber Dichtungsmassen auf Basis gefüllter wäßriger Dispersionen aufweisen. Dies kann sogar so weit führen, daß bei bestimmten Dispersionen, insbesondere wenn eine hohe Konzentration an Detergentien vorliegt, die Oberfläche des zu glättenden Dichtstoffs ausgewaschen wird, was einerseits zu einer Schädigung des Dichtstoffs führt, andererseits zu einer erheblichen Verunreinigung der angrenzenden Baustoffe führen kann.

Im Stand der Technik war es ferner bekannt, bei maschinellem Verformen von wasserhaltigen keramischen Massen aus ungebranntem Ton wäßrige Lösungen von Polyethylenoxiden als Schmiermittel gegenüber metallischen Flächen zu verwenden (US-PS 4 171 337).

Aufgabe der vorliegenden Erfindung war es daher, solche Glättmittel zum Behandeln von Oberflächen von Dichtungsmassen zu finden, die sowohl für wasserfreie Fugendichtungsmassen, beispielsweise auf Basis von Silikon oder Polysulfid beruhen, als auch für wäßrige Dispersionen zum Beispiel auf Basis von Polyacrylaten einsetzbar sind und die die vorher geschilderten Nachteile nicht aufweisen.

Erfindungsgemäß wird nun eine wäßrige, insbesondere wäßrig-alkoholische Lösung von wasserlöslichen Polymeren aus der Gruppe Polyethylenoxid, Polyacrylamid, Polyacrylsäuren bzw. deren Salzen sowie Cellulosederivaten eines Molekulargewichts zwischen 100 000 und 5 000 000 als Hilfsmittel zum mechanischen Glätten von noch nicht erhärteten Oberflächen von Dichtungsmassen für Fugen verwendet.

Es hat sich als besonders vorteilhaft herausgestellt, als wasserlösliches Polymeres Polyethylenoxid bzw. Polyethylenglykol des angegebenen Molekulargewichts zu verwenden. Die Anwendungskonzentration der wäßrigen bzw. wäßrig-alkoholischen Lösung soll vorzugsweise zwischen etwa 0,1 bis 10 Gew.-%, bezogen auf die gesamte Lösung, liegen. Es kann vorteilhaft sein, zunächst eine konzentriertere Lösung herzustellen und diese zum Gebrauch, beispielsweise mit Wasser auf die angegebenen Konzentration zu verdünnen. Dabei kann leicht durch Handversuche festgestellt werden, welche Konzentration bei welchem Polymeren den günstigsten Effekt ergibt. Die zur Herstellung der Lösung verwendeten Alkohole sollten niedere aliphatische wasserlösliche Alkohole sein mit 1 bis 3 Hydroxylgruppen pro Molekül. Es kommen aus praktischen Gründen hier in erster Linie flüchtige Alkohole in Frage wie niedere aliphatische Monoalkohole, wobei aus praktischen und toxikologischen Gründen Propylalkohol bzw. Isopropylalkohol bevorzugt sind. Die Mitverwendung von weiteren mehrwertigen Alkoholen wie Glykol oder auch Glycerin oder Trimethylolpropan ist ohne weiteres möglich. Jedoch sollte dabei bedacht werden, daß insbesondere die mehrfunktionellen Alkohole relativ schwerflüchtig sind und in die Oberfläche der zu glättenden Fugendichtungsmasse eindringen können und dort verbleiben.

Neben dem Polyethylenoxid bzw. Polyethylenglykol des angegebenen Molekulargewichts kann auch Polyacrylamid bzw. Mischpolymerisate des Acrylamids mit substituiertem Acrylamid oder mit freier Acrylsäure oder Methacrylsäure verwendet werden. Weiterhin scheint die Verwendung von wasserlöslichen Salzen und Polyacrylsäuren, die in bekannter Weise modifiziert sein können, in Betracht zu kommen. Die wasserlöslichen Cellulosederivate können durch verschiedenartige Substitution wie durch weite Alkoxylierung modifiziert sein. Es kann auch zweckmäßig sein, durch geeignete Substitution quaternäre Ammoniumgruppen in das Cellulosederivat einzuführen.

Bei den Dichtungsmassen handelt es sich um bekannte, für diesen Zweck im Handel befindliche Stoffe, die entweder an der Luft durch die Einwirkung von Feuchtigkeit, beispielsweise bei Silikon-oder Polyurethanmassen eine Vernetzung erfahren oder aber auch aus Zweikomponentensystemen, wobei wie beispielsweise bei den Polysulfidmassen durch die Einwirkung von Oxidationsmitteln eine Verknüpfung der Prepolymeren untereinander erreicht wird.

Von diesen durch chemische Reaktion härtenden Stoffen unterscheiden sich die lösungsmittelhaltigen Fugendichtungsmassen auf Basis von Styrol-Butadien-Pfropfpolymerisaten und die wäßrigen Dispersionen zum Beispiel auf Basis Polyacrylat- und -methacrylaten, die ebenfalls Grundmasse für Fugendichtungsmittel sein können. Derartige Dichtungsmassen haben im allgemeinen einen relativ hohen Gehalt an Füllstoffen. Die sogenannte Aushärtung bei diesen Massen erfolgte durch Verdunsten des Lösungsmittels oder des Wassers aus der Dispersion, d.h. durch eine einfache Trocknung der Fugendichtungsmasse. Ein erheblicher Gehalt an Füllstoffen ist meist notwendig, um ein Schrumpfen der Dichtungsmasse zu verringern.

Insbesondere die wäßrigen Dispersionen enthalten oftmals mehr oder minder große Mengen an Netzmitteln.

Bei den bisher angewandten Glättungsmitteln war zu befürchten, insbesondere wenn es sich um Sulfonsäuregruppen enthaltende Tenside handelte, daß eine zu weitgehende Dispergierung von Füllstoffanteilen, aber auch Polymerteilchen, erfolgte. Diese führt dann zu einem verwaschenen und nicht mehr scharfen Rand und kann auch zu einer erheblichen Verunreinigung der an die Dichtungsfuge anstoßenden Oberflächen führen. Dies ist insbesondere bei dunkeleingefärbten porösen Untergründen von erheblichem Nachteil.

Beispiele

Beispiel 1

Aus einem handelsüblichen Polyethylenoxid eines Molekulargewichts von etwa 400 000 wurde eine 1 Gew.-%ige Lösung in 90 %igem Isopropanol hergestellt. Diese Lösung hatte bei 25 °C nach Brookfield 18 mPa•s.

Beispiel 2

Aus dem gleichen Polyethylenoxid wie in Beispiel 1 wurde eine 2 %ige Lösung hergestellt, welche unter den gleichen Bedingungen nach Brookfield eine Viskosität von 57 mPa•s aufwies.

Beispiel 3

Aus einem Polyethylenoxid eines Molekulargewichts von etwa 600 000 wurde eine 1 Gew.-%ige Lösung in 90 %igem Isopropanol hergestellt. Diese Lösung hatte bei 25 °C nach Brookfield 20 mPa•s. Aus dem Polyethylenoxid gemäß Beispiel 3 wurde in 90 %igem Isopropanol eine 2 Gew.-%ige Lösung hergestellt. Diese wies bei 25 °C nach Brookfield eine Viskosität von 48 mPa•s auf.

Die gemäß den Beispielen 1 bis 4 hergestellten Glättmittel wurden eingesetzt bei den nachstehend näher erläuterten Fugendichtungsmassen auf Basis von Acrylsäureestercopolymerisaten, Silikonen, Polyurethanen, Polysulfiden sowie einem Lösungsmittel enthaltenden System auf Basis Styrol-Butadien-Styrol-Copolymerisat.

Nachdem in der üblichen Weise die Fugen aus einer Kartusche mit Fugendichtungsmasse gefüllt waren, wurde mit einem Glättspatel aus Metall die Fuge glatt gestrichen, wobei der Spatel immer wieder mit den Netzmitteln gemäß Beispielen 1 bis 4 durch Tauchen benetzt wurde.

Fugendichtungsmassen:

| | | Gew.-% |
|---|---|---|
| A) | **Dispersions-FDM** | |
| | Acrylsäureester-acrylnitrilcopolymer-Dispersion | |
| | (50 %ig) | 35 |
| | Weichmachergemisch auf Basis | |
| | Polyisobutylen | 10 |
| | Pigmente, Füllstoffe und Hilfsstoffe | 55 |

| | | Gew.-% |
|---|---|---|
| B) | **Silicone** | |
| | Polymer aus Dihydroxydimethylpolysiloxan | 65 |
| | Weichmacher aus Polydimethylsiloxan | 20 |
| | Pigmente und Füllstoffe | 10 |
| | Methyltriacetoxysilan als Vernetzer | 5 |

| | | Gew.-% |
|---|---|---|
| C) | **Polyurethane** | |
| | Prepolymer mit endständigen Isocyanatgruppen | 40 |
| | Weichmacher auf Basis von Estern der Phthalsäure | 30 |
| | Pigmente und Füllstoffe | 30 |

| | | Gew.-% |
|---|---|---|
| D) | **Polysulfide** | |
| | Flüssiges Polysulfidpolymer | 35 |
| | Weichmacher auf Chlorparaffin-Basis | 30 |
| | Pigmente u. Füllstoffe | 30 |
| | Oxidationsmittel | |
| | (Bleidioxid / Mangandioxid) | 5 |

| | | Gew.-% |
|---|---|---|
| E) | **Lösungsmittelhaltiges System** | |
| | Styrol-Butadien-Styrol-Copolymerisat | 25 |
| | Styrolharz | 20 |
| | Toluol 40 | |
| | Pigmente und Füllstoffe | 10 |
| | Hochdisperse Kieselsäure | 5 |

**Patentansprüche**

1. Verwendung von wäßrigen oder alkoholischen, insbesondere jedoch wäßrig-alkoholischen Lösungen von wasserlöslichen Polymeren mit einem Molekulargewicht zwischen 100 000 und 5 000 000 aus der Gruppe Polyethylenoxid, Polyacrylamid, Polyacrylsäuren sowie Cellulosederivaten als Hilfsmittel zum mechanischen Glätten von noch nicht erhärteten Oberflächen von pastösen Materialien, insbesondere Fugendichtungsmassen.

2. Verwendung von Polyethylenoxid nach Anspruch 1 in 0,01 bis 30 %iger wäßrig-alkoholischer Lösung zum Glätten von Oberflächen von pastösen Materialien, insbesondere von Fugendichtungsmassen auf Basis wäßriger Polymerdispersionen.

## Claims

1. The use of aqueous or alcoholic, but more especially aqueous-alcoholic, solutions of water-soluble polymers having a molecular weight of 100,000 to 5,000,000 from the group consisting of polyethylene oxide, polyacrylamide, polyacrylic acids and cellulose derivatives as auxiliaries for mechanically smoothing uncured surfaces of paste-form materials, more particularly jointing compounds.

2. The use of polyethylene oxide according to claim 1 in the form of a 0.01 to 30% aqueous-alcoholic solution for smoothing surfaces of paste-form materials, more particularly jointing compounds based on aqueous polymer dispersions.

## Revendications

1. Utilisation de solutions aqueuses ou alcooliques, en particulier cependant de solutions hydro-alcooliques de polymères solubles dans l'eau ayant un poids moléculaire compris entre 100.000 et 5.000.000, choisis dans le groupe polyoxyde d'éthylène, polyacrylamide, acides polyacryliques ainsi que dérivés de cellulose, comme adjuvants pour le lissage à la machine de surfaces non encore durcies de matériaux pâteux, en particulier de masses de jointoiement.

2. Utilisation du polyoxyde d'éthylène selon la revendication 1 en solution hydro-alcoolique à 0,01 à 30 % pour le lissage des surfaces de matériaux pâteux, en particulier de masses de jointoiement à base de dispersions aqueuses de polymères.